## Europäisches Patentamt
## European Patent Office
## Office européen des brevets

(19)

(11) Veröffentlichungsnummer: **0 138 996**
**B1**

(12) # EUROPÄISCHE PATENTSCHRIFT

(45) Veröffentlichungstag der Patentschrift:
**10.06.87**

(21) Anmeldenummer: **84901749.6**

(22) Anmeldetag: **13.03.84**

(86) Internationale Anmeldenummer:
**PCT/EP 84/00072**

(87) Internationale Veröffentlichungsnummer:
**WO 84/03609 (27.09.84 Gazette 84/23)**

(51) Int. Cl.⁴: **A 23 G 3/26,** F 16 C 13/02,
F 16 C 23/08

(54) **DRAGIERVORRICHTUNG MIT DRAGIERTROMMEL.**

(30) Priorität: **19.03.83 DE 3310031**

(43) Veröffentlichungstag der Anmeldung:
**02.05.85 Patentblatt 85/18**

(45) Bekanntmachung des Hinweises auf die Patenterteilung:
**10.06.87 Patentblatt 87/24**

(84) Benannte Vertragsstaaten:
**DE FR GB**

(56) Entgegenhaltungen:
**DE-A-2 212 985**
**DE-A-3 131 808**
**FR-A-788 167**
**FR-A-963 049**
**FR-A-1 309 022**
**FR-A-2 416 740**
**US-A-2 734 406**
**US-A-3 923 349**

(73) Patentinhaber: **DRIAM Metallprodukt GmbH & Co. KG, Aspenweg 19, D-7991 Eriskirch (DE)**

(72) Erfinder: **DUNAJTSCHIK, Rudolf, Flurstr. 20c, D-8990 Lindau- Bodolz (DE)**

(74) Vertreter: **Braito, Herbert, Dipl.- Ing., Postfach 1140 Martin- Luther- Strasse 1, D-7950 Biberach/Riss 1 (DE)**

LIBER, STOCKHOLM 1987

## Beschreibung

Die Erfindung betrifft eine Dragiervorrichtung zum Beschichten von Granulaten wie Drageekerne mit einer vielschichtigen Umhüllung, mit einer vorzugsweise um eine waagerechte Achse in zwei axial zueinander versetzten Drehlagern gehaltenen, an einen Trommelantrieb angeschlossenen Dragiertrommel in der besonderen Ausführungsform vie im Anspruch 1 angegeben.

Bei einer bekannten Dragiervorrichtung dieser Art sind größere Dragiertrommeln meist über Kranzlagerungen gehalten, d. h. am Trommelumfang sind zu beiden Enden hin zwei Ringschienen angebracht, die auf bodenfesten Lagerrollen drehbar gelagert sind. Der Betrieb solcher Trommeln ist jedoch mit verschiedenartigen Nachteilen verbunden. Einmal bringt der Umlauf ständige Erschütterungen mit sich, was eine ungleichmäßige Beschichtung zur Folge hat. Da zudem die Durchlaufgeschwindigkeit an der Lagerstelle zufolge des großen Trommeldurchmessers verhältnismäßig hoch liegt, ist der Trommelbetrieb mit ständigen Lärmstörungen verbunden.

Um dem abzuhelfen, wurden kleinere Trommeln von einem Ende her fliegend getragen (DE-OS 28 05 801), wobei an der gegenüberliegenden Trommel-Stirnseite eine verschließbare Einfüllöffnung angebracht wurde. Damit sind hinsichtlich Beladen und Entladen verschiedene Vorteile verbunden, und die Lagerung kann mit zwei hier unter verhältnismäßig kleinem Abstand voneinander angebrachten Wälzlagern bewältigt werden, ohne daß dort wesentliche Axialkräfte oder Kippmomente aufzunehmen waren.

Bei dem Bestreben, die spezifischen Bearbeitungs- bzw. Herstellungskosten von Dragees und vergleichbaren pharmazeutischen und Süßwaren immer weiter zu senken, kommen in neuerer Zeit immer mehr Großtrommeln zur Anwendung, die an beiden Stirnenden in einem Drehlager gehalten werden müssen (DE-OS 31 31 808). Da sich die Abrolleffekte, die Lagerhöhe, Trocknungswirkung und verschiedenes mehr mit dem Trommeldurchmesser ändern, wird auch die Trommellänge entsprechend groß gewählt. Dies hat bei vernünftiger wirtschaftlicher Bauweise bzw. Leichtbauweise der Trommel eine Durchbiegung zur Folge, d. h. die seitlich an die Trommel angeformten Rohrstutzen bzw. Lagernaben werden zur Waagerechten schräggestellt. Mit Gleitlagern werden dort ebenso wie mit normalen Wälzlagern zu hohe Kantendrücke erzielt, und der Einsatz etwa von Pendelrollenlagern wird dort zu teuer. Andererseits ist die Verwendung von Wälzlagern aus Gründen der Minderung des Drehwiderstandes und der Verbesserung der hygienischen Bedingungen bevorzugt.

Die Erfindung geht aus von der eingangs geschilderten Dragiervorrichtung und verfolgt die Aufgabe, diese Vorrichtung auf möglichst einfache Weise so weiterzubilden, daß die Kosten der Lagerung und die an beiden Lagern aufzunehmenden axialen und Kantenbelastungen verringert werden und die Lebensdauer der Trommellagerung und dadurch der Dragiertrommel gesteigert wird.

Bei der Bemessung dieser Aufhängung ist nahezu ausschließlich die zu übertragende Auflagekraft maßgeblich, was von selbst schon eine so stabile Ausbildung erfordert, daß die geringen Axialkräfte zuverlässig mitübertragen werden können.

Die am Loslager mit der Schwenkeinstellbarkeit vorgesehene selbsttätige axiale Einstellbarkeit hat praktische Bedeutung bei sich ändernden Temperaturunterschieden zwischen der Trommel und der Umgebung bzw. eines die Trommel tragenden Rahmens oder einer Grundplatte. Solche Temperaturunterschiede können praktisch nur in den Betriebspausen aufkommen. Da jedoch große Trommeln - von schnell zu bewerkstelligenden Entlade- und Beladevorgängen einmal abgesehen - für den Dauerbetrieb eingerichtet sind, behält das Loslager in der Regel seine einmal eingenommene Axialstellung nach einem anfänglichen Temperiervorgang im Betrieb ständig bei.

Zum Unterschied von teureren Pendelrollenlagern und dgl. erfolgt hier die Einstellbarkeit nicht an der Wälzfläche selbst, sondern das Wälzlager mit Innen- und Außenring bleibt unverändert und wird nur durch den Anschluß eines seiner beiden Ringe an den allseitig dreheinstellbaren Träger von Kräften entlastet. Da sich aus dem Trommelbetrieb nur vernachlässigbar kleine axiale Lagerkräfte ergeben, lassen sich die einzusetzenden Lager nach der reinen Radialbelastung bemessen. Man benötigt daher bestenfalls einfache Schulterkugellager bzw. ganz normale Rillenkugellager. Tatsächlich kommt man mit dem aus, was die Fachwelt schamhafterweise als "Drehverbindung" bzw. "Papierlager" bezeichnet. Die damit erzielte Kostenersparnis ist so erheblich, daß sie auch von einer sehr sorgsamen Dreheinstellführung nicht aufgebraucht werden kann.

Die hier beim Festlager vorgesehene kardanische Lagerung ist an sich bekannt. So zeigt die FR-A 788 167 eine solche Lagerung mit einem um eine waagerechte erste Achse schwenkbar gelagerten Außenrahmen, der um eine senkrecht zur ersten Achse angeordneten zweite Achse drehbar einen Innenrahmen hält, in welchem in einer beide Achsen senkrecht schneidenden dritten Achse ein Lager vorgesehen ist, das auch als Wälzlager ausgebildet sein kann. Auf diese Weise können zwar Kantenpressungen an sich vermieden werden, eine Abstimmung der Beanspruchungen in den beiden entfernt voneinander angebrachten Drehlager einer Dragiertrommel ist auf diese Weise jedoch nicht ohne weiteres möglich.

Bei einer bevorzugten Ausführungsform der Erfindung umfaßt die kardanische Aufhängung einen äußeren Kardanrahmen, der über zwei gleichachsige Gelenkzapfen um eine erste Schwenkachse in einem ortsfesten Träger gehalten ist und um eine zur ersten senkrechte zweite Schwenkachse schwenkeinstellbar einen inneren Kardanring trägt, der mit dem äußeren Wälzlagerring verbunden ist. Der innere Kardanring kann dann im Prinzip direkt auf einer Trommelnabe sitzen.

Zweckmäßigerweise werden zwischen dem inneren Kardanring und der Dragiertrommel Stütz- bzw. Kupplungsmittel zum unmittelbaren Abstützen bzw. Feststellen der Trommel in ihrer Drehlage vorgesehen, was für Entlade- und Beladevorgänge, für Gesamt-Reinigungsvorgänge, vor allem aber für Montagevorgänge von Bedeutung sein kann.

Dies läßt sich verhältnismäßig einfach dadurch erreichen, daß in der zweiten (inneren) Schwenkachse wenigstens ein den äußeren Kardanrahmen und den inneren Kardanring durchsetzender Gelenkbolzen bis zum Eingriff in eine Kupplungsaussparung an der Trommelnabe radial verstellbar vorgesehen wird. Beispielsweise kann der in der lotrechten Gelenkachse unten vorgesehene Gelenkbolzen mit Gewindeeingriff zentriert im inneren Kardanring gehalten werden. Auf diese Weise läßt sich z. B. das Trommelende ohne Einsatz eines gesonderten Hebezeuges etwas anheben, um das Lager zu entlasten, um dadurch dessen Austausch und z. B. das Auswechseln einer Antriebsscheibe zu erleichtern. Bei solchen Ausführungen wird dann die Feststellung von Hand bewerkstelligt. Statt des Gewindeeingriffs kann allerdings auch eine Kraftbetätigung - etwa durch einen Druckmittelzylinder - vorgesehen und u. U. im Betriebszyklus vorgegeben selbsttätig gesteuert werden.

Ein weiteres Problem ergibt sich bei Dragiervorrichtungen, bei welchen Trocknungsluft in einem Strömungsverteiler durch eine Übergangsfläche zwischen an der Trommel vorgesehenen Strömungskanälen und gehäusefesten Anschlüssen geführt wird. An dieser Übergangsfläche können beim Durchbiegen der Trommel entsprechend der Niegung der Lagerachse zur theoretischen Mittelachse Abweichungen zwischen den dort zueinander geführten Vorrichtungsteilen entstehen, was neben Undichtigkeiten auch Vorschleiß und späteren Betriebsausfall zur Folge haben kann.

Um dem abzuhelfen, werden erfindungsgemäß die undrehbar angeordneten Teile des Strömungsverteilers wenigstens mittelbar in der Übergangsfläche zur Trommel dieser gegenüber selbsttätig einstellbar geführt. Dies läßt sich auf verhältnismäßig einfache Weise dadurch bewerkstelligen, daß die undrehbaren Teile des Strömungsverteilers an dem undrehbaren, selbsttätig zur Trommel einstellbaren Teil eines Trommellagers, insbesondere des Festlagers, angeschlossen sind. Bei einer Schrägstellung der Achse ser zugehörigen Trommelnabe in Folge einer Durchbiegung im mittleren Trommelteil werden somit die undrehbaren Teile des Strömungsverteilers, die ohnehin irgendwie gegen eine Mitdrehung gehalten werden müssen, in der Schrägstellung der Achse nachgeführt, was sich in einer Schrägstellung der Übergangsfläche auswirkt. Im Prinzip ist es so möglich, den undrehbaren Teil des Strömungsverteilers lediglich mit Randdichtungen der Strömungskanäle am drehbaren Teil anzuschließen, ihn im übrigen aber völlig freischwebend zu halten, ohne daß mechanische Berührung an der Übergangsfläche erfolgt. Aber auch dann, wenn die beiden Teile des Strömungsverteilers an dieser Fläche unmittelbar aneinander gelagert sind, werden durch die Nachführung unnötige Beanspruchungen verhindert. Dabei versteht es sich von selbst, daß die vom Strömungsverteiler nach außen führenden Anschlüsse - Vorzugsweise als Schläuche - so verformbar zu gestalten sind, daß sie den geringen Taumelbewegungen folgen können.

Bei dieser Nachführung ist die Ausbildung der Schwenkeinstellbarkeit selbst ohne sonderliche Bedeutung. Beim Kardanlager sollten jedenfalls die undrehbaren Teile fest mit dem inneren Kardanring verbunden sein, wobei etwa eine am inneren Ende des Innenringes angeschlossenen Ringscheibe, insbesondere mittels sternförmig radial ausladender Anschlußarme, mit dem undrehbaren Teil des Strömungsverteilers verbunden wird.

Zwischen dem hinsichtlich seiner Ausbildung weniger bedeutsamen zweiten Drehlager und einer zylindrischen Außenfläche einer Trommelnabe kann eine zu dieser zentrische Torusfläche vorgesehen sein. Es versteht sich, daß man hier zwei Ringe vorsehen kann, wobei die Torusfläche die Form einer Kugel-Ringfläche hat, deren Mittelpunkt in der Achse der Trommelnabe liegt. Einfacher ist es jedoch, die am Innenteil des zweiten Drehlagers vorgesehene Torusfläche konvex nach innen zu wölben und die Zylinderfläche mit Neigungs-Umfangsspiel umgreifen zu lassen. Dadurch ergibt sich zwar im Prinzip nur eine punktförmige Auflage die sich unter der Last nur auf wenige mm Auflagefläche vergrößert, aber die einzige Relativbewegung dürfte bei Betriebspausen in einer axialen Verschiebung von weniger als 1 mm bestehen. Dafür sind die hier vorhandenen Flächenpressungen ohne weiteres zulässig. Es bedarf auch keiner besonderen Maßnahmen, den Schiebewiderstand hier entsprechend klein zu halten, da vor allem in der Süßwarenherstellung die Luft stets solchen Feuchtigkeitsgehalt mit speziell schmierfähigen Bestandteilen enthält, daß Trockenreibung praktisch nicht zu überwinden ist.

Zwischen dem drehbaren Innenteil der zweiten Drehlagerung sollte jedoch eine Mitnahmeverbindung in Form eines etwa parallel zur Trommelachse verlaufenden Vorsprungs vorgesehen werden, der mit Längsspiel in einer Radialnut des anderen Teiles greift. Durch entsprechend gestaltete Kupplungsvorrichtungen kann im Prinzip auch sichergestellt werden, daß die Torusfläche selbst von radialen Kräften ganz entlastet wird.

Die Zeichnung gibt eine bevorzugte Ausführung der Erfindung wieder. Es zeigen

Fig. 1 eine teilweise geschnittene Seitenansicht einer erfindungsgemäßen Dragiervorrichtung,

Fig. 2 einen vergrößerten Schnitt durch diese Vorrichtung nach der Linie II-II in Fig. 1,

Fig. 3 einen wiederum vergrößerten Teilschnitt längs der Linie III-III in Fig. 2,

Fig. 4 eine Stirnansicht der Vorrichtung gemäß Pfeil IV von links in Fig. 1 gesehen,

Fig. 5 einen Teilschnitt längs der Linie V-V in Fig. 4

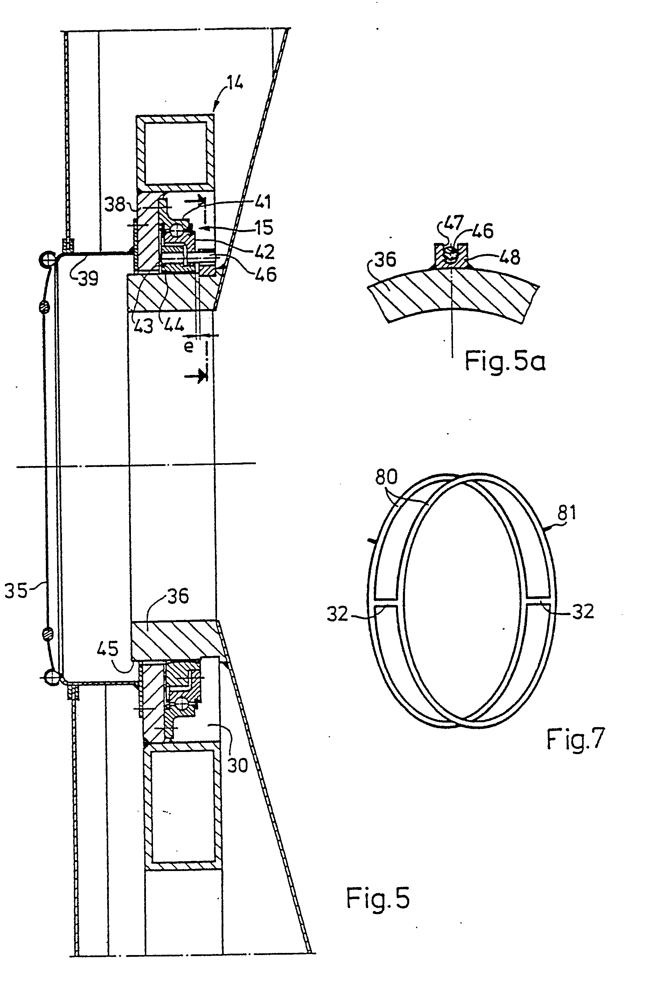

Fig, 5a einen weiteren Teilschnitt nach der Schnittlinie in Fig. 5 und

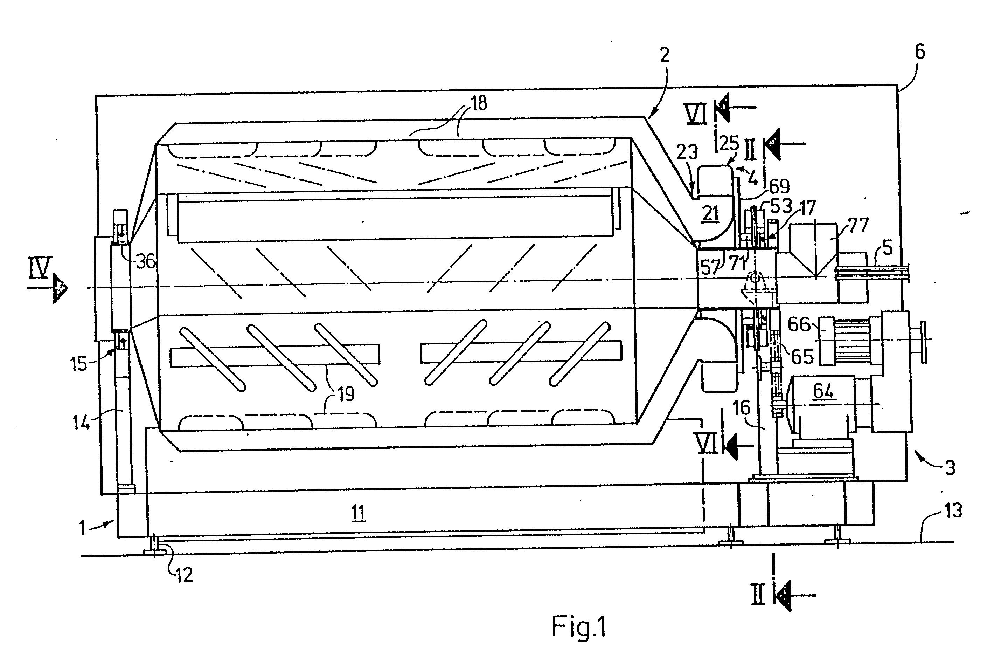

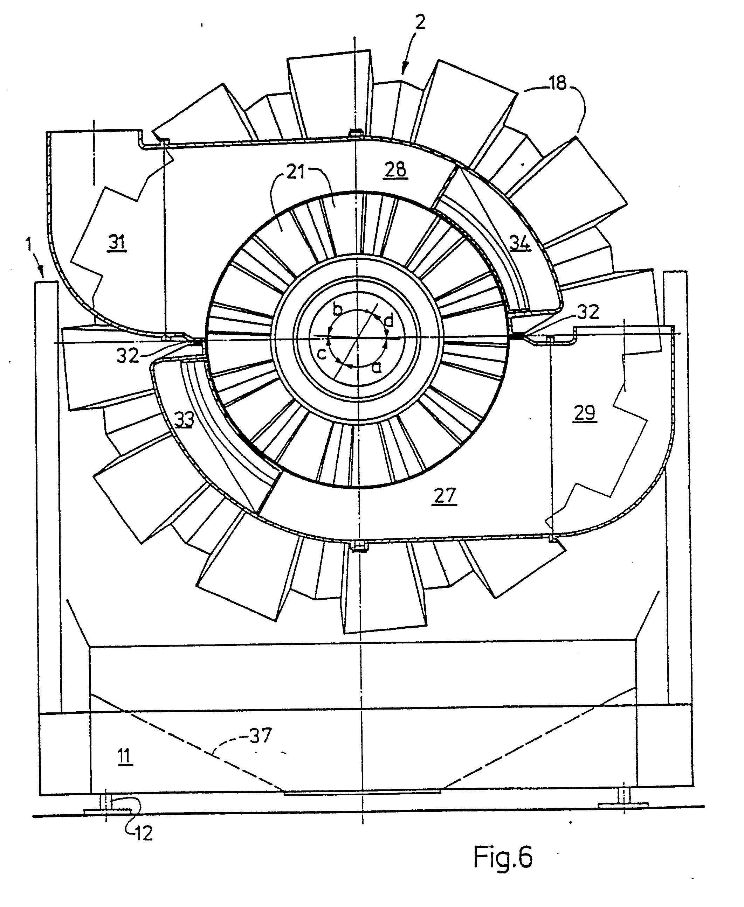

Fig. 6 einen Schnitt nach der Linie VI-VI in Fig. 1. und

Fig. 7 eine Dichtungsausbildung für den Strömungsverteile.

Die dargestellte Dragiervorrichtung besteht im wesentlichen aus einem Maschinenrahmen 1, der Dragiertrommel 2, einer Antriebsvorrichtung 3, einem Strömungsverteiler 4 mit einem nicht weiter gezeigten Anschluß an ein Saug- und Druckgebläse, einer Auftragsvorrichtung, von welcher hier nur die Massezufuhrleitung 5 gezeigt ist, und einer die Trommel 2 auf dem Maschinenrahmen 1 umschließenden Gehäuse 6.

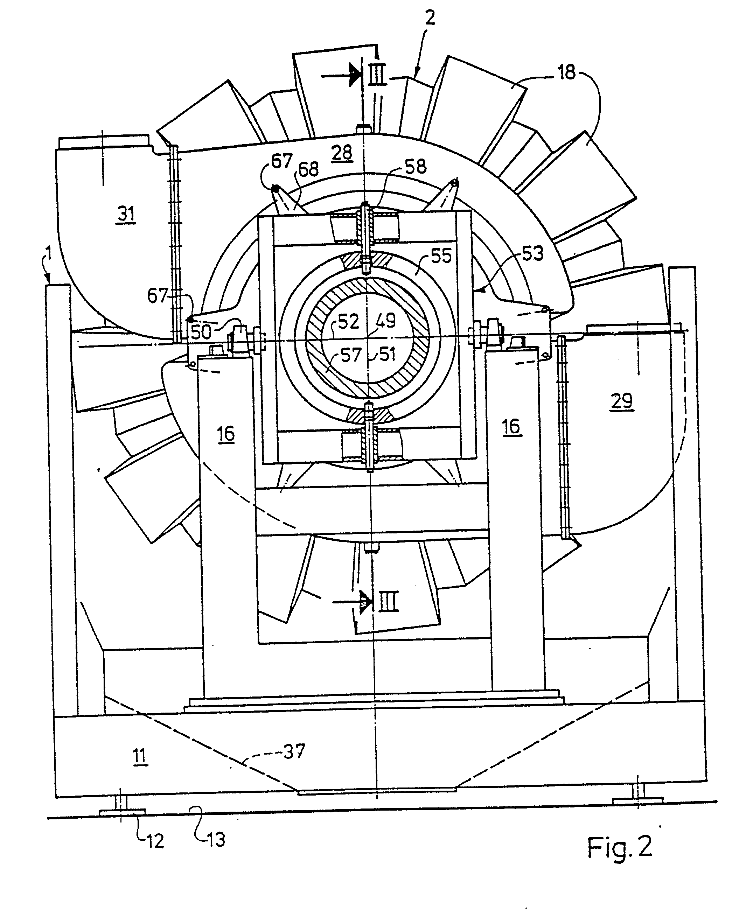

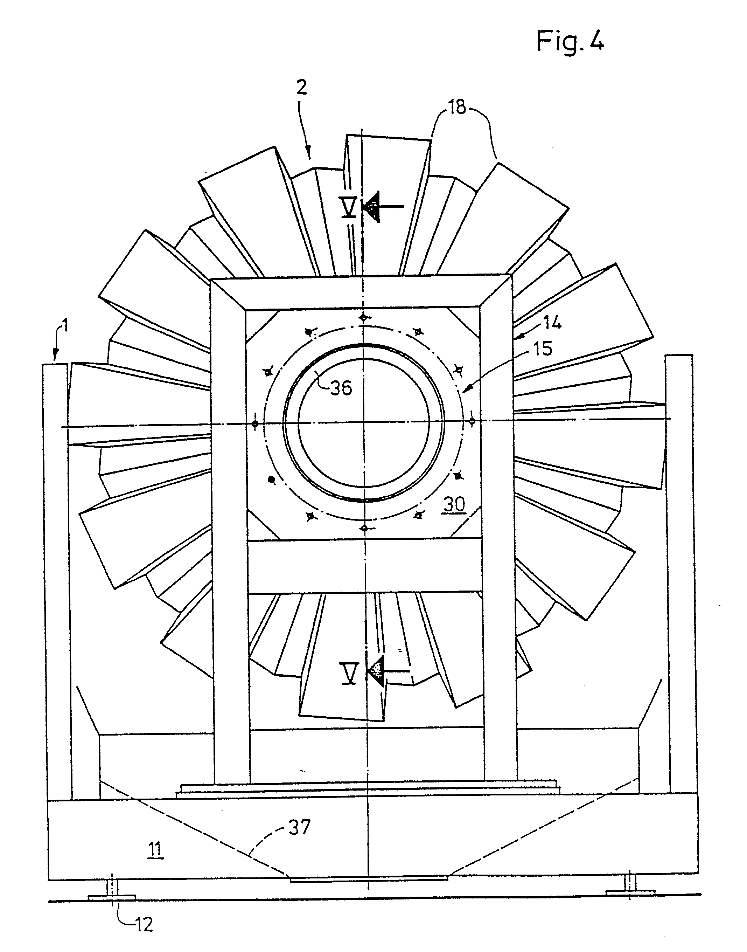

Hauptbestandteil des Maschinenrahmens 1 ist eine als Kasten-Hohlkonstuktion ausgebildete Grundplatte 11, die mittels in Höhenrichtung einstellbarer Füße 12 auf der Aufstellfläche 13 gehalten ist und mittels eines vorderen Lagerständers 14 in der aus den Fig. 4 und 5 zu ersehenden Weise ein Loslager 15 und mittels eines hinteren Lagerständers 16 ein Festlager 17 hält, wie dies im einzeinen in den Fig. 2 und 5 dargestellt ist. Im Prinzip entspricht die Dragiervorrichtung mit der Dragiertrommel 2 der Ausführung nach der deutschen Offenlegungsschrift 31 31 808. Während man dort jedoch eine Neunecktrommel verwendet hat, kommt hier eine Zwölfecktrommel zum Einsatz. Es sind demnach zwölf Leitkanäle 18 vorgesehen, die jeweils durch Luftdurchlässe 19 verschiedender Ausführung mit dem Trommelinnenraum in Verbindung und an ihrem rechten Ende in Fig. 1 mit jeweils einer Anschlußkammer 21 des in einen Stirnflansch 22 der Trommel angeflanschten und dieser gegenüber abgedichteten drehbaren Teiles 23 des Strömungsverteilers 4 angeschlossen sind.

In einer zylindrischen Umfangsfläche 24 ist der drehbare Teil vom undrehbaren Teil 25 mittels seitlicher Dichtungssegmente 26 abgedichtet umgeben. Dieser undrehbare Teil setzt sich, wie vor allem aus Fig. 6 zu ersehen, aus einer unteren Segmentrinne 27 und einer oberen Segmentrinne 28 zusammen, die zwei Anschlußkrümmer 29, 31 aufweisen, einander gegenüberliegend sich jeweils über ca. 180° erstrecken und gegeneinander durch Streifendichtungen 32 abgeschirmt sind. Im Prinzip könnte daher auf dem halben Umfang eingeblasen und auf dem gegenüberliegenden halben Umfang abgeführt bzw. abgesaugt werden.

In beide Segmentrinnen sind jedoch auswechselbare Blenden 33, 34 eingabaut, mittels welcher der wirksame Anschlußwinkel a der unteren Segmentrinne 27 gegenüber dem Anschlußwinkel b der oberen Segmentrinne 28 auf Umfangsabstand im Winkel c bzw. d gehalten werden kann. Diese Abstände sind notwendig, damit der untere Anschlußwinkel a stets kleiner bleibt als der Auflagewinkel eines in der Dragiertrommel zu behandelnden Granulatbettes. Es ist jedoch verständlich, daß jede Kammer 21 etwa beim Umfang der Dragiertrommel im Uhrzeigersinn gemäß Fig. 6 im Bereich des Winkels c von der unteren Segmentrinne 27 abgetrennt wird, bevor sie im Bereich des Anschlußwinkels b mit der oberen Segmentrinne in Verbindung kommt. Je nach dem, welcher Anschlußkrümmer 29 oder 31 an Druck oder an Unterdruck angeschaltet ist, wird das Granulatbett von unten oder von oben durchströmt.

Die Dragiertrommel kann in bekannter Weise durch die mittels des Deckels 35 abgeschlossene Trommelnabe 36 hindurch oder auf andere Weise beschickt werden. Zum Entladen wird zweckmäßigerweise ein Wandungsteil ausgeklappt, so daß die ganze Trommelcharge in den fest oder bewegbar im Maschinenrahmen angebrachten Trichter 37 fallen kann.

Die Lagernabe 36 ist, wie vornehmlich Fig. 4 zeigt, von der Rahmenöffnung 30 des aus Vierkantrohren zusammengeschweißten Lagerständers 14 rings umschlossen. Diese Rahmenöffnung wird weitgehend ausgefüllt durch eine innen am Lagerständer 14 angebrachte Lagerplatte 38, die mittels eines Rohrstutzens 39 den Deckel 35 hält und an welcher der Außenring 41 des Loslagers 15 angeflanscht ist. Der Innenring 42 ist dagegen fest verschraubt mit einem Einstellring 43, der innen eine konvex gewölbte Torusfläche 44 bildet, an der sich mit einem eine Schrägstellung erlaubenden Umfangsspiel die äußere Zylinderfläche 45 der Trommelnabe 36 abstützt.

Zur drehschlüssigen Verbindung der Ringe 42 und 43 mit der Trommelnabe 36 dient dabei ein an oder zwischen beiden Ringen eingespannter Kupplungsstift 46, der axial nach rechts in Fig. 5 in eine Radialnut 47 eines Gabelstückes 48 vorragt, das mit axialem Abstand e zum Innenring 42 auf der Lagernabe 36 befestigt ist.

Damit kann sich das Trommelende mit seiner Nabe gegenüber dem fest am Lagerständer 14 angebrachten Loslager 15 axial frei bewegen und dank der Torusfläche 44 auch im begrenzten Maße zur Waagerechten schrägstellen.

Auf diese Weise wird das Loslager 15 von axialen Kräften ebenso wie von Randbelastungen durch Kippmomente völlig entlastet. Es überträgt praktisch nur rein radiale Kräfte, während die Axialkraft maximal den Wert der Reibung zwischen den Flächen 44 und 45 bei einer Wärmeausdehnung gegenüber dem Festlager 17 erreichen kann.

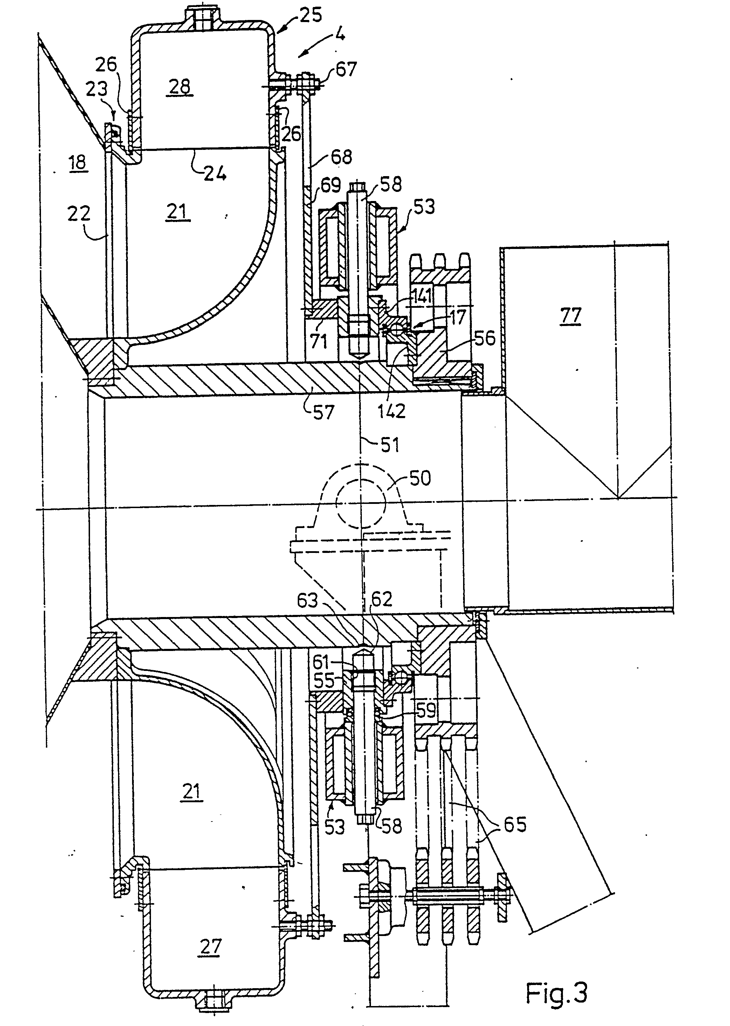

Auch der Lagerständer 16 für das Festlager 17 ist aus Vierkantrohren und damit biegesteif und verhältnismäßig starr ausgebildet. Dort ist jedoch das Lager nicht rahmenartig umschlossen, sondern die Ständerpfosten 161 enden mit Abstand unterhalb der Trommelachse 49 und tragen mittels zweier Schwenklager 50 in einer die Trommelachse 49 im wesentlichen rechtwinklig schneidendenwaagerechten Achse 52 schwenkeinstellbar einen äußeren Kardanrahmen 53 der wiederum durch Rechteckrohre gebildet ist und in einer beide Achsen 19 und 52 rechtwinklig schneidenden zweiten, lotrechten Schwenkachse 51 einen inneren Kardanring 55 trägt. Dieser ist gemäß Fig. 3 fest mit dem Außenring 141 des Festlagers 17 verbunden, das die gleiche Ausbildung hat wie das Loslager 15. Es ist dann auch der Innenring 142 fest mit einem Ketten-Antriebsrad 56 verbunden, das seinerseits fest auf der Trommelnabe 57 sitzt.

Zur Lagerung in der lotrechten Gelenkachse 51 dienen zwei jeweils durch Kardanrahmen 53 und Kardanring 55 hindurchgeführte Gelenkbolzen 58. Auf dem unteren Gelenkbolzen sitzt zudem ein kleines Kugellager 59, mit dem das vom Festlager aufgenommene Trommelgewicht vom Kardanring 55 auf den Kardanrahmen 53 übetragen wird. Beide Gelenkbolzen 58 sitzen jeweils mit ihrem Gewinde 61 im Kardanring 55 und können axial soweit verstellt werden, bis ihre Kegelspitze 62 in eine Ansenkung 63 der Lagernabe 57 greift und dadurch die Trommel im Maschinenrahmen drehschlüssig feststellt bzw. sie etwas anhebt. Auf diese Weise werden Montage und Demontage wesentlich erleichtert, da sich das Lager 17 durch Abstützen im Kardanring entlasten läßt. Man kann so ohne Einsatz eines besonderen Hebezuges das Lager 17 und das Ketten-Antriebsrad 56 austauschen.

Bei zurückgeschraubten Gelenkbolzen 58 ist die in dem nahezu ausschließlich radial beanspruchten Festlager 17 drehbare Trommelnabe 57 in axialer Richtung eindeutig durch die Abstützung über den Innenring 142, die Gelenkbolzen 58, den Kardanrahmen 53 und die Schwenklager 50 am Lagerständer 16 und damit am Maschinenrahmen festgelegt. Dadurch ist einerseits dem Festlager 17 und andererseits dem Loslager 15 jeweils ein Anschluß, mit allseitiger Einstellbarkeit zugeordnet, d. h. beide Trommelnaben 36 und 57 sind frei schwenkeinstellbar gehalten. Die Dragiertrommel 2 kann sich daher nahezu nach Belieben durchbiegen und entsprechend leicht gebaut sein.

Da das Kettenrad 56 dicht bei der Kardananordnung auf der Trommelnabe 57 aufgekeilt ist, ändern sich die Verhältnisse an der vom Getriebe 64 her geführte Kette 65 praktisch nicht, unabhängig davon, wie die Art der Antriebsvorrichtung mit dem Motor 66 beschaffen ist.

Der äußere, undrehbare Teil 25 des Strömungsverteilers 4 kann im Prinzip auf dem inneren Teil 23 drehbar gelagert werden, sofern er nur gegen Drehung abgestützt wird. Da jedoch hierfür zusätzlicher axialer Raum erforderlich wäre, ist dieser undrehbare Teil mittels einzelner Schrauben 67, ggf. mittels einzelner sternförmiger Arme 68 an einer Scheibe 69, befestigt, die über einen Zwischenring 71 wiederum fest mit dem Kardanring 55 verbunden wird. Damit wird der undrehbare Teil 25 des Strömungsverteilers dem drehbaren Teil 23 nachgeführt, wenn sich die Trommel durchbiegt und demgemäß die Trommelnabe 57 sich schrägstellt. Von Dichtungsmitteln wie den Dichtungsplatten abgesehen, brauchen sich also Innenteil und Außenteil nicht berühren, sie werden einander eben mit geringem Spielabstand zugeordnet.

Die Befestigung des aus den beiden Segmentrinnen 27 und 28 gebildeten drehbaren Teiles an einzelnen unter gleichbleibender Umfangsteilung vorgesehenen Schrauben 67 hat zudem den Vorteil, daß man den "undrehbaren Teil" 25 nach Belieben um die Trommelachse schwenken und ihn dadurch auf eine unterschiedliche Neigung der Oberfläche des in der Trommel behandelten Granulatbettes einstellen kann. Eine unmittelbare Befestigung der beiden Segmentrinnen aneinander ist nicht einmal notwendig. Es kann auch die Länge der Abdeckung durch die beiden Blenden 33, 34 entweder durch verstellbare Ausbildung dieser Blenden oder durch einen Blendenaustausch nach Bedarf geändert werden.

Der Innenraum der Dragiertrommel steht auch über das sich in die Trommelnabe 57 anschließende Winkel-Rohrstück 77 mit der Atmosphäre in Verbindung. Im Prinzip kann auch dieses Rohrstück zur Zuführung von unter Druck stehender Luft verwendet werden, wenn aus irgendwelchen Gründen der Strömungsweg nicht über die Segmentrinne 28 führen soll.

Da die Dichtungssegmemte 26 und Streifendichtungen 32 stets die Anschlußöffnungen der Segmentrinnen 27, 28 rings umschliessen und zudem diese Anschlußöffnungen in der zylindrischen Umfangsfläche 24 ineinander ab schließen, sind einmal Saug- und Druckweg exakt voneinander getrennt, und es ist auch ein völliger Abschluß gegen Außenluft im Strömungsverteiler 4 gewährleistet. Es kann auch der Innenraum der Dragiertrommel 2 grundsätzlich gegenüber der Atmosphäre völlig abgeschlossen werden, so daß unmittelbar oder innerhalb des ringsumschließenden Gehäuses im Umluftbetrieb gearbeitet wird. Durch Drosselung im Strömungsweg des Winkel-Rohrstückes 77 kann auch der Abschlußgrad geändert werden.

Die Abdichtung selbst kann dabei moch vereinfacht werden, wenn nach Fig. 7 zwischen drehbaren und nicht drehbaren Teilen zwei Ringdichtungen in Form von Ringschläuchen 80 angebracht werden, die aus verhältnismäßig weichem, gummiartig verformbarem Material mit glatter, gleitförmiger Oberfläche bestehen. Diese Ringschläuche lassen sich nach Art von Fahrradschläuchen ausbilden und auch mit einem Ventil 81 versehen, um sich auf den jeweils gewünschten Innendruck aufblasen zu lassen. Die Streifendichtungen 32 können im Prinzip umverändert bleiben und die Segmentrinnen 27, 28 gegenüber dem Innenraum der Trommelflächen gasdicht abschirmen. Auch diese Streifendichtungen lassen sich im Prinzip einstückig am die Ringschläuche 80 anformen.

**Patentansprüche**

1. Dragiervorrichtung zum Beschichten von Granulaten wie Drageekerne mit einer vielschichtigen Umhüllung, mit einer vorzugsweise um eine waagerechte Achse in zwei axial zueinander versetzten Drehlagern gehaltenen, an einen Trommelantrieb angeschlossenen Dragiertrommel, dadurch gekennzeichnet, daß ein als Festlager dicht am Trommelantrieb (56, 3) angeordnetes Drehlager (17) eine Drehverbindung in Form eines leichten Wälzlagers aufweist, dessen Außenring (141) mittels zweier sich kreuzender Schwenkachsen (51, 52) kardanisch aufgehängt ist, während das am anderen Trommelende vorgesehene zweite Drehlager (15) wenigstens einen nachgeschalteten Anschlußteil (43) aufweist, demgegenüber das Trommelende allseitig schwenkeinstellbar und längsverschiebbar gehalten ist.

2. Dragiervorrichtung nach Anspruch 1, dadurch gekennzeichnet daß die kardanische Aufhängung einen äußeren Kardanrahmen (53) aufweist der über zwei gleichachsige Gelenkzapfen um eine erste Schwenkachse (52) in einem ortsfesten Träger gehalten ist und um eine zur ersten senkrechte zweite Schwenkachse (51) schwenkeinstellbar einen inneren Kardanring (55) trägt, der mit dem äußeren Walzlagerring (141) verbunden ist.

3. Dragiervorrichtung nach Anspruch 2, gekennzeichnet durch zwischen dem inneren Kardanring (55) und der Dragiertrommel (2) vorgesehene Stütz- bzw. Kupplungsmittel (62, 63) zum unmittelbaren Abstützen bzw. Feststellen der Trommel in ihrer Drehlage.

4. Dragiervorrichtung nach Anspruch 3, dadurch gekennzeichnet, daß in der zweiten (inneren) Schwenkachse (52) wenigstens ein den äußeren Kardanrahmen (53) und den inneren Kardanring (55) durchsetzender Gelenkbolzen (58) bis zum Eingriff in eine Kupplungsaussparung (63) an der Trommelnabe (57) radial verstellbar vorgesehen ist.

5. Dragiervorrichtung nach Anspruch 4, dadurch gekennzeichnet, daß der in der lotrechten Gelenkachse (51) unten vorgesehene Gelenkbolzen (58) mit Gewindeeingriff zentriert im inneren Kardanring (55) gehalten ist.

6. Dragiervorrichtung nach einem der Ansprüche 1 bis 5, mit einem Strömungsverteiler für Trocknungsluft durch eine Übergangsfläche zwischen an der Trommel vorgesehenen Strömungskanälen (18) und gehäusefesten Anschlüssen (27, 28), dadurch gekennzeichnet, daß die undrehbar angeordneten Teile (23) des Strömungsverteilers wenigstens mittelbar in der Übergangsfläche (28) zur Trommel (2) dieser gegenüber selbstätig einstoffbar geführt sind.

7. Dragiervorrichtung nach Anspruch 6, dadurch gekennzeichnet, daß die undrehbaren Teile (23) des Strömungsverteilers (4) an dem undrehbaren, selbstätig zur Trommel (2) einstellbaren Teil (141, 55) eines Trommellagers, insbesondere des Festlagers (17), angeschlossen sind.

8. Dragiervorrichtung nach Anspruch 7, dadurch gekennzeichnet, daß die undrehbaren Teile (23) des Strömungsverteilers (4) fest mit dem inneren Kardanring (55) verbunden sind.

9. Dragiervorrichtung nach Anspruch 8, dadurch gekennzeichnet, daß eine am inneren Ende der Kardanringes angeschlossene Ringscheibe (69), insbesondere mittels sternförmig radial ausladender Anschlußarme (69) mit den undrehbaren Teilen (23) des Strömungsverteilers (4) verbunden ist.

10. Dragiervorrichtung nach Anspruch 1, dadurch gekennzeichnet, daß zwischen dem zweiten Drehlager (15) und einer zylindrischen Außenfläche (45) einer trommelnabe (36) eine zu dieser zentrische Torusfläche (44) vorgesehen ist.

11. Dragiervorrichtung nach Anspruch 10, dadurch gekennzeichnet, daß die am Innenteil (42) des zweiten Drehlagers (15) vorgesehene Torusfläche (44) konvex nach innen wölbt ist und die Zylinderfläche (45) mit Neigungs-Umfangsspiel umgreift.

12. Dragiervorrichtung nach Anspruch 1, 10 oder 11 , dadurch gekennzeichnet, daß zwischen dem drehbaren Innenteil (42) der zweiten Drehlagerung (15) eine Mitnahmeverbindung in Form eines etwa parallel zur Trommelachse verlaufenden Vorsprunges (46) vorgesehen ist, der mit Längsspiel in eine Radialnut (47) des anderen Teiles (48, 36) eingreift.

13. Dragiervorrichtung nach einem der Ansprüche 6 bis 12, dadurch gekennzeichnet, daß zwischen dem drehbaren Teil (26) und dem undrehbaren Teil (25) des Strömungsverteilers (4) eine Umfangsfläche (24) zentrisch umschließend zwei seitliche Ringdichtungen vorgesehen sind, zwischen welchen insbesondere Streifendichtungen (33) estreckt sind.

14. Dragiervorrichtung nach Anspruch 12 oder 13, gekennzeichnet durch die Ausbildung der Ringdichtung als Ringschläuche (80) aus gummiartig verformbarem Werkstoff mit gleitgünstiger Oberfläche.

15. Dragiervorrichtung nach Anspruch 14, dadurch gekennzeichnet, daß die Ringschläuche (80) mit einem Rückschlagfüllventil und auf einen frei wählbaren Druck aufblasbar ausgebildet sind.

**Claims**

1. Coating device for coating granules such as pill cores with a multi-layered covering, comprising a coating drum which is preferably retained about a horizontal axis in two pivotal bearings, which are offset axially relative to each other, and is connected to a drum drive, characterised in that a pivotal bearing (17), which is provided as a fixed bearing close to the drum drive (56, 3), has a pivotal connection in the form of a lightweight roller bearing with an outer ring (141) which is cardanically suspended by means of two intersecting pivotal axles (51, 52), whilst the second pivotal bearing (15), which is provided at the other end of the drum, has at least one subsequent connection member (43) relative to which the drum end is retained so as to be pivotally adjustable in all directions and longitudinally displaceable.

2. Coating device according to claim 1, characterised in that the cardanic suspension has an outer cardan frame (53) which is retained about a first pivotal axis (52) in a fixed support member via the intermediary of two coaxial hinge pins and is provided with an inner cardan ring (55), which is connected to the outer roller bearing ring (141), so as to be pivotally adjustable about a second pivotal axis (51) extending perpendicularly to the first pivotal axis.

3. Coating device according to claim 2, characterised by supporting or coupling means (62, 63), which are provided between the inner cardan ring (55) and the coating drum (2), for directly supporting or securing the drum in its pivotal position.

4. Coating device according to claim 3, characterised in that at least one hinge pin (58), which extends through the outer cardan frame (53) and the inner cardan ring (55), is provided in the second (inner) pivotal axis (52) so as to be radially adjustable on the drum hub (57) until it engages in a coupling recess (63).

5. Coating device according to claim 4, characterised in that the hinge pin (58), which is provided in the vertical pivotal axis (51) at the lower end, is retained centrally in the inner cardan ring (55) by threaded engagement.

6. Coating device according to one of claims 1 to 5, comprising a flow distributor for drying air through a transitional area between flow channels (18), which are provided on the drum, and connections (27, 28) which are secured to the housing, characterised in that the members (23) of the flow distributor, which are non-rotatably disposed, are guided at least indirectly in the transitional area (28) relative to the drum (2) so as to be automatically adjustable relative to the drum.

7. Coating device according to claim 6, characterised in that the non-rotatable members (23) of the flow distributor (4) are connected to the non-rotatable member (141, 55) of a drum bearing, more especially of the fixed bearing (17), the non-rotatable member being automatically adjustable relative to the drum (2).

8. Coating device according to claim 7, characterised in that the non-rotatable members (23) of the flow distributor (4) are securely connected to the inner cardan ring (55).

9. Coating device according to claim 8, characterised in that an annular disc (69), which is connected to the inner end of the cardan ring, is connected to the non-rotatable members (23) of the flow distributor (4), more especially by means of connecting arms (68) which project radially in the shape of a star.

10. Coating device according to claim 1, characterised in that a toroidal surface (44), which is centrally disposed relative to a drum hub (36), is provided between the second pivotal bearing (15) and a cylindrical outer surface (45) of the drum hub.

11. Coating device according to claim 10, characterised in that the toroidal surface (44), which is provided on the inner portion (42) of the second pivotal bearing (15), is curved inwardly in a convex manner and engages around the cylindrical surface (45) with an inclined circumferential clearance.

12. Coating device according to claim 1, 10 or 11, characterised in that a carrier connection is provided between the rotatable inner portion (42) of the second pivotal bearing (15) in the form of a projection (46) which extends substantially parallel to the drum axis and engages, with longitudinal clearance, in a radial groove (47) in the other portion (48, 36).

13. Coating device according to one of claims 6 to 12, characterised in that two lateral sealing rings are provided between the rotatable member (26) and the non-rotatable member (25) of the flow distributor (4) so as to centrally surround a circumferential surface (24), strip seals (33) in particular extending between the annular seals.

14. Coating device according to claim 12 or 13, characterised by the provision of the annular seals as annular hoses (80), formed from a material which is deformable like rubber, with a surface which promotes sliding.

15. Coating device according to claim 14, characterised in that the annular hoses (80) are provided so as to be inflatable by means of a fill-up check valve and to a freely selectable pressure.

## Revendications

1. Dispositif pour appliquer un revêtement en plusieurs couches sur des granulats tels que des noyaux de dragées, comportant un tambour à dragées, de préférence à axe horizontal, qui est porté par deux paliers rotatifs espacés axialement l'un de l'autre et qui est relié à un mécanisme d'entraînement, caractérisé en ce qu'un palier rotatif (17), disposé à proximité immédiate du mécanisme d'entraînement (56, 3) et servant d'appui fixe, comporte une liaison tournante sous forme d'un palier de roulement léger dont la bague extérieure (141) est suspendue à la façon cardan grâce à deux axes oscillants concourants (51, 52), tandis que le second palier rotatif (15) prévu à l'autre extrémité du tambour comporte au moins une pièce de raccordement (43) par rapport à laquelle l'extrémité du tambour est montée orientable de tous côtés et coulissante en direction longitudinale.

2. Dispositif selon la revendication 1, caractérisé en ce que la suspension du type cardan comporte un cadre extérieur de cardan (53) qui est porté par un support fixe au moyen de deux tourillons coaxiaux sur un premier axe de pivotement (52) et qui porte un anneau intérieur de cardan (55) de manière pivotante par rapport à un deuxième axe (51) perpendiculaire au premier, cet anneau intérieur étant lié à ladite bague extérieure (141) du roulement.

3. Dispositif selon la revendication 2, caractérisé en ce qu'il comporte, entre l'anneau intérieur de cardan (55) et le tambour à dragées (2), des moyens de support et d'accouplement (62, 63) agencés pour permettre de supporter directement et de fixer le tambour en position angulaire autour de son axe de rotation.

4. Dispositif selon la revendication 3, caractérisé en ce qu'au moins un boulon d'articulation (58), disposé suivant le second axe de pivotement (51) (axe intérieur) et traversant à la fois le cadre extérieur de cardan (53) et l'anneau intérieur de cardan (55), est réglable en position radiale jusqu'à s'engager dans un évidement d'accouplement (63) ménagé sur le moyeu (57) du tambour.

5. Dispositif selon la revendication 4, caractérisé en ce que le boulon d'articulation (58) se trouve en bas sur l'axe vertical de pivotement (51) et maintenu en position centrée par vissage dans l'anneau intérieur de cardan (55).

6. Dispositif selon l'une quelconque des revendications 1 à 5, comportant un distributeur d'écoulement d'air de séchage à travers une surface de passage entre des canaux d'écoulement (18) prévus sur le tambour et des raccords fixes (27, 28), caractérisé en ce que les parties non tournantes (23) du distributeur d'écoulement sont guidées au moins indirectement dans la zone de la surface de passage (28) vers le tambour (2), de manière à être ajustées automatiquement par rapport à celui-ci.

7. Dispositif selon la revendication 6, caractérisé en ce que les parties non tournantes (23) du distributeur d'écoulement (4) sont rattachées à la partie non tournante (141, 55) d'un palier du tambour, notamment du palier servant d'appui fixe (17), cette partie non tournante étant réglable automatiquement par rapport au tambour (2).

8. Dispositif selon la revendication 7, caractérisé en ce que les parties non tournantes (23) du distributeur d'écoulement (4) sont liées rigidement à l'anneau intérieur de cardan (55).

9. Dispositif selon la revendication 8, caractérisé en ce qu'une plaque annulaire (69), fixée sur le côté intérieur de l'anneau de cardan, est liée aux parties non tournantes (23) du distributeur d'écoulement (4), en particulier au moyen de bras de liaison (68) s'étendant radialement en étoile.

10. Dispositif selon la revendication 1, caractérisé en ce qu'il comporte, entre le second palier rotatif (15) et une surface extérieure cylindrique (45) d'un moyeu (36) du tambour, une surface torique (44) centrée par rapport à ce moyeu.

11. Dispositif selon la revendication 10, caractérisé en ce que ladite surface torique (44), prévue sur la pièce intérieure (42) du second palier rotatif (15), est bombée du côté intérieur et entoure ladite surface cylindrique (45) avec un jeu périphérique pour l'inclinaison.

12. Dispositif selon la revendication 1, 10 ou 11, caractérisé en ce qu'il comporte, sous la partie intérieure tournante (42) du second palier rotatif (15), une liaison d'entraînement sous forme d'un élément saillant (46) qui s'étend sensiblement parallèlement à l'axe du tambour et qui est engagé avec un jeu longitudinal dans une encoche radiale (47) de l'autre partie (48, 36).

13. Dispositif selon l'une quelconque des revendications 6 à 12, caractérisé en ce qu'il comporte, entre la partie tournante (23) et la partie non tournante (25) du distributeur d'écoulement (4), deux joints annulaires latéraux d'étanchéité disposés de manière centrée autour d'une surface périphérique (24), joints entre lesquels s'étendent notamment des joints d'étanchéité en forme de bandes (33).

14. Dispositif selon la revendication 12 ou 13, caractérisé en ce que les joints annulaires d'étanchéité sont constitués par des anneaux tubulaires (80) faits d'une matière gommeuse déformable et présentant une surface glissante.

15. Dispositif selon la revendication 14, caractérisé en ce que les anneaux tubulaires (80) sont pourvus d'une valve avec retenue pour être gonflés à une pression choisie à volonte.

Fig.1

Fig. 2

138 996

Fig.3

Fig. 4

Fig.5a

Fig.7

Fig.5

Fig.6